# FASCICULE DE BREVET EUROPEEN

(11) **EP 3 728 037 B1**
(45) Date de publication et mention de la délivrance du brevet: **05.03.2025**
(21) Numéro de dépôt: 18833966.7
(22) Date de dépôt: 18.12.2018
(51) Int. Cl.: B64D 27/18, B64D 29/06, B64D 27/40

(54) **STRUCTURE PORTEUSE DESTINÉE AU MONTAGE SUR UN GÉNÉRATEUR DE GAZ**
TRAGENDE STRUKTUR ZUR MONTAGE AUF EINEM GASGENERATOR
LOAD-BEARING STRUCTURE INTENDED TO BE MOUNTED ON A GAS GENERATOR

(30) Priorité: 18.12.2017 FR 1762324
(43) Date de publication de la demande: 28.10.2020
(73) Titulaire: SAFRAN AIRCRAFT ENGINES, 75015 Paris (FR)
(72) Inventeur: HELLEGOUARCH, Antoine, Elie, 91560 CROSNE (FR); TESNIERE, Marc, Patrick, 91750 CHAMPCUEIL (FR)
(74) Mandataire: Cabinet Beau de Loménie
(86) Numéro de dépôt international: PCT/FR2018/053364
(87) Numéro de publication internationale: WO 2019/122680

(56) Documents cités:
- EP-A1- 2 067 698
- EP-B1- 2 067 698
- FR-A1- 2 873 985
- FR-A1- 2 873 988
- FR-A1- 2 993 535
- FR-B1- 2 873 985
- FR-B1- 2 873 988
- US-A1- 2012 111 995
- US-A1- 2014 130 512
- US-A1- 2015 259 074

## Description

La présente invention concerne le domaine des suspensions d'ensembles propulsifs pour aéronef, et plus particulièrement une structure porteuse configurée pour être fixée sur un générateur de gaz (en anglais : « engine core ») d'un turboréacteur à double flux (en anglais : « turbofan »), afin de permettre sa connexion à une structure réceptrice de l'aéronef, qui peut également être appelée structure avion, à travers une suspension.

Typiquement, un turboréacteur à double flux est suspendu à une structure réceptrice de l'aéronef, par exemple un pylône fixé sous la voilure, à travers une suspension amont attachée à un carter intermédiaire solidaire du carter de soufflante et une suspension aval attachée au carter de turbine. On évite ainsi un porte-à-faux qui soumettrait ce moteur à des efforts en flexion pouvant notamment être nocifs à l'ajustement des rotors de compresseur et turbine dans leurs carters respectifs.

Toutefois, un tel arrangement présente l'inconvénient d'un grand encombrement. Avec des poussées et taux de dilution croissants, le diamètre des soufflantes est aussi en nette croissance, ce qui rend cet arrangement de plus en plus encombrant. Ainsi, lorsqu'un turboréacteur à double flux avec un haut taux de dilution est suspendu de la voilure de l'aéronef suivant un tel arrangement, la garde au sol de l'aéronef peut être insuffisante pour accommoder l'ensemble propulsif formé par le turboréacteur et sa nacelle, exigeant ainsi des modifications à la nacelle et/ou même au train d'atterrissage, ce qui peut être coûteux et avoir un impact négatif sur les performances globales de l'aéronef.

Ainsi, pour remédier à cet inconvénient, plusieurs solutions ont été proposées pour suspendre un turboréacteur à double flux uniquement par son générateur de gaz, en aval de la soufflante. Ainsi, dans certaines solutions, une enveloppe structurale du générateur de gaz intégrant une partie du pylône a été proposée pour reprendre les efforts de flexion, permettant ainsi la suspension du turboréacteur à double flux à travers cette enveloppe structurale, malgré la mise de la soufflante en porte-à-faux. Dans la publication de demande internationale WO 2008/000924 A1 d'autres concepts sont proposés dans lesquels le turboréacteur à double flux est suspendu à un pylône à travers une structure rapportée sur un carter intermédiaire du générateur de gaz. Ceci implique toutefois une concentration des efforts, et notamment des efforts en flexion, sur l'extrémité du pylône attachée à ces structures rapportées, requérant ainsi des renforcements importants avec une pénalité conséquente en termes de masse ajoutée. Ces solutions présentent toutes l'inconvénient d'une masse ajoutée qui peut s'avérer plus ou moins considérable. D'autres structures ont été divulguées dans les publications de demandes de brevets FR 2 993 535 A1 et US 2012/111995 A1.

### Objet et résumé de l'invention

Une structure porteuse selon la revendication 1 est fournie. Les modes de réalisation préférés sont décrits dans les revendications dépendantes.

La présente divulgation vise à remédier à ces inconvénients en proposant une structure porteuse configurée pour être montée sur un générateur de gaz d'un turboréacteur à double flux pour aéronef afin de relier le turboréacteur à double flux à une structure de suspension sans passer par le carter de la soufflante tout en assurant la reprise des moments en flexion en direction longitudinale sans grande pénalité de masse. Pour cela, suivant un premier aspect, ette structure porteuse, qui peut notamment être formée en une seule pièce monobloc, peut comprendre deux poutres longitudinales et une liaison transversale les reliant, qui peut par exemple comprendre un arceau. Chacune des deux poutres longitudinales peut comporter au moins une interface de montage avant et une interface de montage arrière, pour monter la structure porteuse sur le générateur de gaz, et un point de suspension latéral pour transmettre des efforts longitudinaux et verticaux entre la structure porteuse et une structure de suspension. L'interface de montage arrière peut être apte à permettre au moins un débattement longitudinal du générateur de gaz, et la liaison transversale comprendre un point de suspension central avec un orifice configuré pour recevoir un groin de suspension orienté en direction longitudinale pour transmettre des efforts latéraux et verticaux entre la structure porteuse et la structure de suspension. Par point de suspension de la structure porteuse, on entend par exemple une attache apte à transmettre des efforts entre la structure porteuse et la structure de suspension. Puisque chaque attache transmet des efforts en un point assez précis, elle peut également être appelée point d'attache.

Grâce à ces dispositions, les distances entre le centre de gravité du turboréacteur à double flux et les points de fixation de chaque interface de montage avant, ainsi qu'entre ce centre de gravité et le point de suspension central, peuvent être minimisées, réduisant ainsi les efforts en flexion, qui peuvent être efficacement repris par les deux poutres longitudinales sans grande pénalité en termes de masse. En outre, le débattement longitudinal permis par les interfaces de montage arrière, qui peuvent notamment comprendre chacune des moyens de guidage longitudinal, permet d'accommoder la dilatation thermique du générateur de gaz en fonctionnement. Ces moyens de guidage longitudinal peuvent comprendre une coulisse apte à recevoir un coulisseau monté sur un plot solidaire d'un carter de turbine du générateur de gaz, mais il est également envisageable d'inverser cet arrangement, pour intégrer le coulisseau dans l'interface de montage arrière, et la coulisse sur le carter de turbine du générateur de gaz. Afin d'accommoder aussi la dilatation thermique du générateur de gaz en direction latérale, les interfaces de montage arrière peuvent aussi être aptes à permettre des débattements latéraux du générateur de gaz. Pour néanmoins assurer une liaison solide de cette structure au générateur de gaz, chaque interface de montage avant peut être apte à transmettre des efforts longitudinaux et transversaux, par exemple en combinant au moins un boulon pour transmettre des efforts en traction et un ergot pour transmettre des efforts en cisaillement.

Un deuxième aspect de la présente divulgation concerne un ensemble structurel comprenant cette structure porteuse et une structure de suspension fixée à la structure porteuse par les points de suspension arrière et central. Afin d'y assurer la transmission des efforts dans deux plans longitudinaux, la structure de suspension peux comprendre deux triangles de suspension, fixés chacun à un des points de suspension arrière correspondant, tandis que, pour transmettre des efforts dans un plan transversal, la structure de suspension peut comprendre un groin de suspension, reçu en direction longitudinale dans un réceptacle correspondant du point de suspension central. Le point de suspension central peut comprendre une rotule, comportant une noix de rotule dans laquelle soit formé l'orifice, afin d'accommoder des déplacements angulaires entre la structure porteuse et la structure de suspension. Pour assurer une bonne reprise des efforts dans le plan transversal, la structure de suspension peut comprendre une pyramide de suspension, le groin de suspension étant situé sur un sommet de la pyramide de suspension.

Finalement, un troisième aspect de la présente divulgation concerne un aéronef comprenant au moins une structure réceptrice, un turboréacteur à double flux et l'ensemble structurel reliant le turboréacteur à double flux à la structure réceptrice. Le turboréacteur à double flux peut ainsi être suspendu, par exemple, à une structure réceptrice solidaire de la voilure de l'aéronef, quoiqu'il soit aussi envisageable d'utiliser l'ensemble structurel pour relier le turboréacteur à une structure réceptrice directement solidaire du fuselage de l'aéronef, notamment du fuselage arrière.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique en perspective d'un aéronef,
- la figure 2 est une vue schématique en coupe longitudinale d'un turboréacteur à double flux de l'aéronef de la figure 1,
- la figure 3 est une vue latérale d'un ensemble structurel reliant le turboréacteur à double flux de la figure 2 à une structure réceptrice de l'aéronef de la figure 1,
- la figure 4 est une vue frontale de l'ensemble structurel de la figure 3,
- la figure 5 est une vue en perspective trois-quarts arrière de l'ensemble structurel de la figure 3,
- la figure 6 est une vue de détail d'une interface de montage avant de l'ensemble structurel de la figure 3,
- la figure 7 est une vue de détail d'une interface de montage arrière de l'ensemble de la figure 3,
- la figure 8 est une vue de détail d'un point de suspension central d'une variante de l'ensemble structurel de la figure 3,
- la figure 9 est une vue en perspective trois-quarts arrière d'une variante de l'ensemble de la figure 3,
- la figure 10 est une vue schématique de dessus d'un mécanisme de déploiement interposé entre un capot ouvrant du générateur de gaz du turboréacteur à double flux de la figure 2 et une poutre longitudinale de l'ensemble de la figure 3, avec le capot ouvrant en position fermée,
- la figure 11 est une vue schématique de dessus du mécanisme de déploiement de la figure 10, avec le capot ouvrant en position ouverte,
- la figure 12 est une vue schématique arrière du mécanisme de déploiement de la figure 10, avec le capot ouvrant en position ouverte,
- la figure 13 est une vue schématique arrière d'une variante du mécanisme de déploiement de la figure 10, avec le capot ouvrant en position ouverte,
- la figure 14 est une vue schématique de dessus d'une autre variante du mécanisme de déploiement de la figure 10, avec le capot ouvrant en position ouverte,
- la figure 15 est une vue de détail d'un joint d'étanchéité amont du capot ouvrant de la figure 10, en position fermée,
- la figure 16 est une vue schématique de dessus d'encore une autre variante du mécanisme de déploiement de la figure 10, avec le capot ouvrant en position ouverte,
- la figure 17 est une vue schématique de dessus d'un mécanisme de déploiement avec capot ouvrant en position fermée,
- la figure 18 est une vue schématique de dessus du mécanisme de déploiement de la figure 17, avec le capot ouvrant en position ouverte,
- la figure 19 est une coupe schématique transversale du mécanisme de déploiement de la figure 17,
- la figure 20 est une vue schématique de dessus d'un mécanisme de déploiement avec le capot ouvrant en position fermée,
- la figure 21 est une vue schématique de dessus du mécanisme de déploiement de la figure 20, avec le capot ouvrant en position ouverte, et
- la figure 22 est une vue schématique de dessus du mécanisme de déploiement de la figure 20, avec le capot ouvrant en position intermédiaire entre les positions ouverte et fermée.

### Description détaillée de l'invention

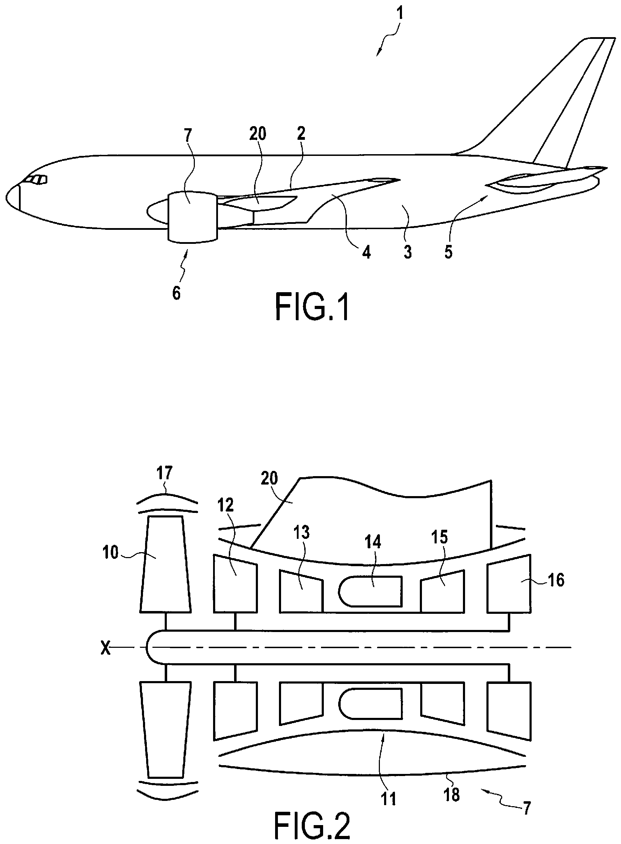

La figure 1 illustre un aéronef 1 comprenant un fuselage 3, une voilure 4 et un empennage 5, et deux ensembles propulsifs 6 suspendus, sous la voilure 4, à des structures réceptrices 2 correspondantes. Chaque structure réceptrice 2 peut être solidaire d'une aile respective parmi les deux ailes de la voilure 4. Bien que sur la figure 1, qui est une vue latérale de l'aéronef 1, une seule aile de cette voilure 4 soit visible avec sa structure réceptrice 2 et son ensemble propulsif 4 correspondant, l'aéronef 1 peut être sensiblement symétrique par rapport à un plan longitudinal et vertical, de telle manière que l'autre aile, avec la structure réceptrice et l'ensemble propulsif 6 respectifs, soit située du côté caché de l'aéronef 1, et ne soit donc pas visible sur cette figure. De manière connue en soi, chaque structure réceptrice 2 peut comprendre un pylône fixé à l'aile, par exemple par des interfaces fixées sur au moins un longeron de l'aile. Toutefois, alternativement ou en complément à un tel pylône, la structure réceptrice peut consister encore en un caisson structural de l'aile.

Un autre ensemble propulsif 6 identique ou similaire est également suspendu à une deuxième aile de l'autre côté de l'aéronef, non visible sur la figure. Chacun de ces deux ensembles propulsifs 6 peut comprendre un turboréacteur à double flux 7. Comme illustré schématiquement sur la figure 2, ce turboréacteur à double flux 7 peut comprendre une soufflante 10 et un générateur de gaz 11 formé par un compresseur basse pression 12, un compresseur haute pression 13, une chambre de combustion 14, une turbine haute pression 15 couplée au compresseur haute pression 13 pour son actionnement, et une turbine basse pression 16 couplée à la soufflante 10 et au compresseur basse pression 12 pour leur actionnement, alignés en direction longitudinale suivant l'axe longitudinal X qui peut être aussi l'axe de poussée du turboréacteur à double flux 7. Dans chacun des deux ensembles propulsifs 6, la soufflante 10 et le générateur de gaz 11 reçoivent des carénages 17, 18 respectifs.

Dans l'aéronef 1 illustré, les turboréacteurs à double flux 7 peuvent avoir un taux de dilution élevé, supérieur par exemple à 5:1, 10:1, voire même 15:1. Le diamètre de la soufflante 10 est donc particulièrement grand, de telle manière que, pour maintenir une garde au sol suffisante, puisque l'aéronef 1 illustré est à voilure basse, la soufflante 10 est décalée vers le haut et vers l'avant par rapport à une disposition conventionnelle. Pour parvenir à ce décalage, la soufflante 10 n'est pas suspendue à la structure réceptrice 2 solidaire de la voilure 4, mais est maintenue uniquement par ses liaisons structurales au générateur de gaz 11. Ainsi, comme illustré sur la figure 1, l'ensemble structurel 20 reliant chaque turboréacteur à double flux 7 à la voilure n'est pas attaché directement à la soufflante 10, mais uniquement au générateur de gaz 11, avec la soufflante 10 suspendue ainsi en porte-à-faux par rapport à cet ensemble 20.

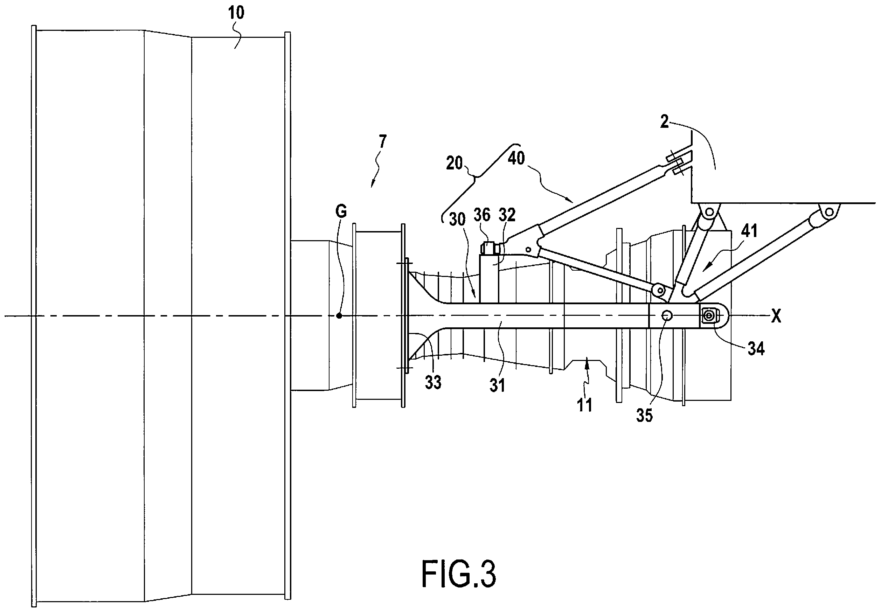

Un exemple de réalisation de l'ensemble 20 est illustré sur les figures 3 à 5. Ainsi, comme on peut voir sur ces figures, cet ensemble structurel 20 comprend une structure porteuse 30 configurée pour être rapportée sur le générateur de gaz 11 et une structure de suspension 40 pour relier la structure porteuse 30 à la structure réceptrice de l'aéronef 1. Plus spécifiquement, la structure porteuse 30, qui peut notamment être formée en une seule pièce monobloc, comprend deux poutres longitudinales 31 et une liaison transversale 32 les reliant de façon rigide. Dans le mode de réalisation illustré, cette liaison transversale 32 est en forme d'arceau, mais d'autres formes peuvent être envisagées pour cette liaison transversale 32, comme par exemple un anneau fermé sur 360°, monocorps avec les deux poutres longitudinales ou rapporté à celles-ci, ce qui pourrait renforcer encore la rigidité de la structure porteuse 30 dans le plan transversal. Comme dans le mode de réalisation illustré, chacune des deux poutres longitudinales 31 comporte au moins une interface de montage avant 33 et une interface de montage arrière 34, chaque interface étant configurée pour monter la structure sur le générateur de gaz 11, et un point de suspension latéral 35 pour connexion avec la structure de suspension 40. Ces points de suspension latéraux 35 sur les poutres longitudinales 31 sont complémentés, comme illustré, par un point de suspension central 36 pour connexion avec la structure de suspension 40, situé sur la liaison transversale 32.

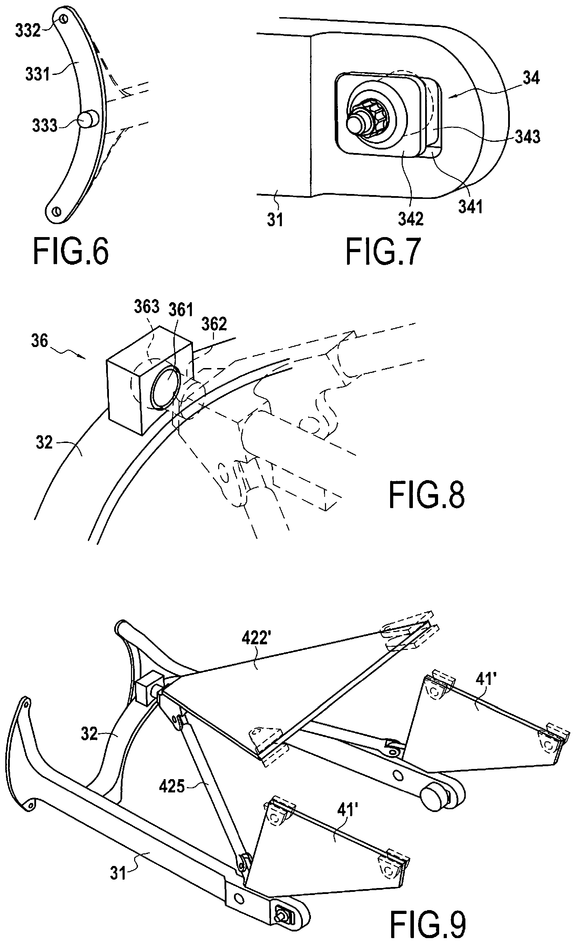

Comme illustré, chaque interface de montage avant 33 permet de monter la structure porteuse 30 sur le générateur de gaz 11. Par définition, le générateur de gaz d'une turbomachine à double flux est parcouru par la veine de flux primaire de la turbomachine et est entouré par la veine de flux secondaire de la turbomachine. Chaque interface de montage avant 33 étant fixée sur le générateur de gaz 11, elle se situe radialement dans un espace inter-veines entre la veine de flux primaire et la veine de flux secondaire. Chaque interface de montage avant 33 peut être configurée pour être fixée à un carter situé à l'amont du compresseur haute pression 13 du générateur de gaz 11, et axialement en aval d'un carter de la soufflante 10, par exemple un carter formé par un flasque de carter inter-compresseurs situé entre le compresseur basse pression 12 et le compresseur haute pression 13, et transmettre des efforts tant en direction longitudinale comme dans un plan transversal perpendiculaire à l'axe longitudinal X. Pour cela, comme illustré en détail sur la figure 6, chaque interface de montage avant 33 peut comprendre une plaque 331 avec des orifices traversants 332 pour recevoir des boulons afin de transmettre les efforts longitudinaux en traction, et au moins un ergot 333 pour transmettre des efforts transversaux en cisaillement. Ces efforts transversaux peuvent être tant latéraux, c'est-à-dire parallèles à l'axe latéral Y, comme verticaux, c'est-à-dire parallèles à l'axe vertical Z.

D'autre part, chaque interface de montage arrière 34 peut être configurée pour être reliée à un carter plus proche de l'extrémité arrière du générateur de gaz 11, par exemple un carter de turbine, en permettant un débattement relatif longitudinal et transversal du générateur de gaz 11 par rapport à cette interface de montage arrière 34, de manière à accommoder la dilatation thermique du générateur de gaz 11 en fonctionnement. Ainsi, comme illustré sur la figure 7, chaque interface de montage arrière 34 peut comprendre une coulisse 341 pour recevoir un coulisseau 342 monté sur un plot 343 solidaire du générateur de gaz 11, par exemple d'un carter de turbine du générateur de gaz 11, en permettant un débattement du coulisseau 342 en direction longitudinale ainsi qu'en direction latérale. De cette manière, les interfaces de montage arrière 34 ne transmettront normalement que des efforts verticaux pour compenser le décalage longitudinal entre le centre de gravité G du turboréacteur à double flux 7 et les interfaces de montage avant 33.

Ainsi, lorsque la structure porteuse 30 est montée sur le générateur de gaz 11, ce dernier peut être fixé entre les deux poutres longitudinales 31, orientées parallèlement à l'axe longitudinal X du turboréacteur à double flux 7, de manière à ce qu'elles reprennent les moments en flexion verticale, et notamment ceux générés par le porte-à-faux de la soufflante 10 (incluant le carter de soufflante également désigné par 10 sur la figure 3), déchargeant ainsi les carters du générateur de gaz 11 de tels efforts.

Les points de suspension latéraux 35 peuvent être situés sur les extrémités arrière des poutres longitudinales 31, à proximité des interfaces de montage arrière 34, et être configurés pour transmettre des efforts longitudinaux et verticaux. Pour cela, chaque point de suspension latéral 35 peut par exemple comprendre un axe 351 destiné à être reçu, orienté en direction latérale, dans un orifice correspondant dans la structure de suspension 40. Le point de suspension central 36 peut être situé, comme illustré, au centre de la liaison transversale 32 chevauchant le générateur de gaz 11 lorsque la structure est montée sur celui-ci. Le point de suspension central peut alors directement surplomber l'axe longitudinal X du turboréacteur à double flux 7, et être configuré pour transmettre des efforts verticaux et latéraux dans le plan transversal. Pour cela, le point de suspension central 36 comprend, comme illustré, un orifice 361 configuré pour recevoir un groin de suspension 362 orienté en direction longitudinale. Dans une variante illustrée en détail sur la figure 8, le point de suspension central 36 peut aussi comprendre une rotule 363 comportant une noix de rotule dans laquelle soit formé l'orifice 361, afin de permettre un débattement angulaire du groin de suspension 362 dans le point de suspension central 36, et éviter ainsi la transmission de moments à travers le point de suspension central 36.

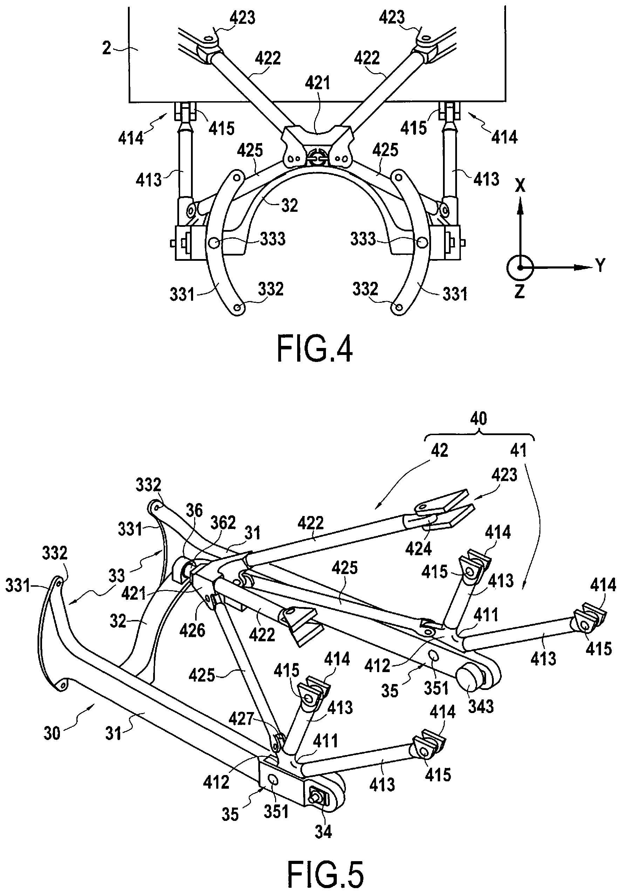

Comme illustré sur les figures 3 à 5, la structure de suspension 40 peut comprendre deux triangles de suspension 41, chacun configuré pour être connecté par une pointe inférieure 411 (figure 5) à un des points de suspension latéraux 35 de la structure 30. Quand les points de suspension latéraux 35 comprennent, comme dans l'exemple illustré, des axes 351, les chapes 412 destinés à les recevoir peuvent être formées dans ces pointes inférieures 411 des triangles de suspension 41. Chaque triangle de suspension 41 peut être orienté de manière à transmettre vers la structure réceptrice 2 les efforts verticaux et longitudinaux qu'il reçoit à travers le point de suspension latéral 35 correspondant. Afin de limiter leur masse, chaque triangle de suspension 41 peut être formé, comme illustré, par deux bielles 413 reliées par la pointe inférieure 411, quoiqu'il soit aussi envisageable d'utiliser une plaque triangulaire 41' pour chaque triangle de suspension, comme dans la variante illustrée sur la figure 9. Chaque bielle 413 de chaque triangle de suspension 41 peut être configurée, comme illustré, pour être connectée, par son extrémité opposée à la pointe inférieure 411, à un point d'attache 414 sur la structure réceptrice 2, à travers une articulation 415 permettant au moins un débattement angulaire dans le plan du triangle de suspension 41, de manière à éviter la transmission de moments de flexion entre la structure réceptrice 2 et chaque bielle 413. Ces articulations 415 peuvent comprendre aussi des rotules pour permettre des débattements angulaires dans d'autres plans.

La suspension 40 peut par ailleurs comprendre aussi, comme illustré, une pyramide de suspension 42 configurée pour relier le point de suspension central 36 de la structure 30 à la structure réceptrice 2. Pour cela, cette pyramide de suspension 42 peut comprendre un sommet 421, dans lequel soit formé le groin de suspension 362, et quatre bielles se rejoignant au sommet 421. Plus spécifiquement, parmi ces quatre bielles, deux bielles supérieures 422 peuvent être fixées rigidement au sommet 421, s'étendre vers des points d'attache 423 correspondants sur la structure réceptrice 2, et être configurées pour être reliées à ces points d'attache 423 à travers des articulations 424 pour empêcher la transmission de moments de flexion, dans ce plan incliné, entre chacun des points d'attache 423 et la bielle supérieure 422 correspondante. Deux bielles inférieures 425, reliées chacune par des articulations 426, 427 correspondantes au sommet 421 de la pyramide de suspension 42 et à la pointe inférieure 411 d'un triangle de suspension 41 respectif, peuvent compléter la pyramide de suspension 42 de manière à maintenir l'écart entre le sommet 421 de la pyramide 42 et les pointes inférieures 411 des triangles de suspension 41. La géométrie de la structure de suspension 40 peut ainsi être maintenue même quand la structure porteuse 30 en est détachée.

Comme chacun des triangles de suspension 41, les deux bielles supérieures 422 pourraient aussi être remplacées par une plaque triangulaire 422', orientée dans le plan incliné et reliée de manière analogue au sommet 421 de la pyramide de suspension 42 et aux points d'attache 423 sur la structure réceptrice 2, comme dans la variante illustrée sur la figure 9, dans laquelle les éléments équivalents à ceux de la figure 5 reçoivent les mêmes chiffres de référence. L'impact aérodynamique d'une telle plaque 422' sur le flux d'air dans la veine de flux secondaire de la turbomachine à double flux peut être maîtrisé, par exemple en ajourant la plaque 422', ce qui permet aussi d'en réduire la masse. Même si sur la variante illustrée les plaques triangulaires 41' et 422' remplacent chacun des triangles de suspension 41 ainsi que les bielles supérieures 422, il est aussi envisageable de ne remplacer que les bielles supérieures 422 ou l'un et/ou l'autre des deux triangles de suspension 41 dans un structure de suspension mixte combinant bielles et une ou deux plaques triangulaires. Par ailleurs, la plaque 422', voire l'une ou l'autre des plaques 41', pourra être utilisée comme support d'un échangeur de chaleur surfacique, par exemple un échangeur air/air ou air/huile.

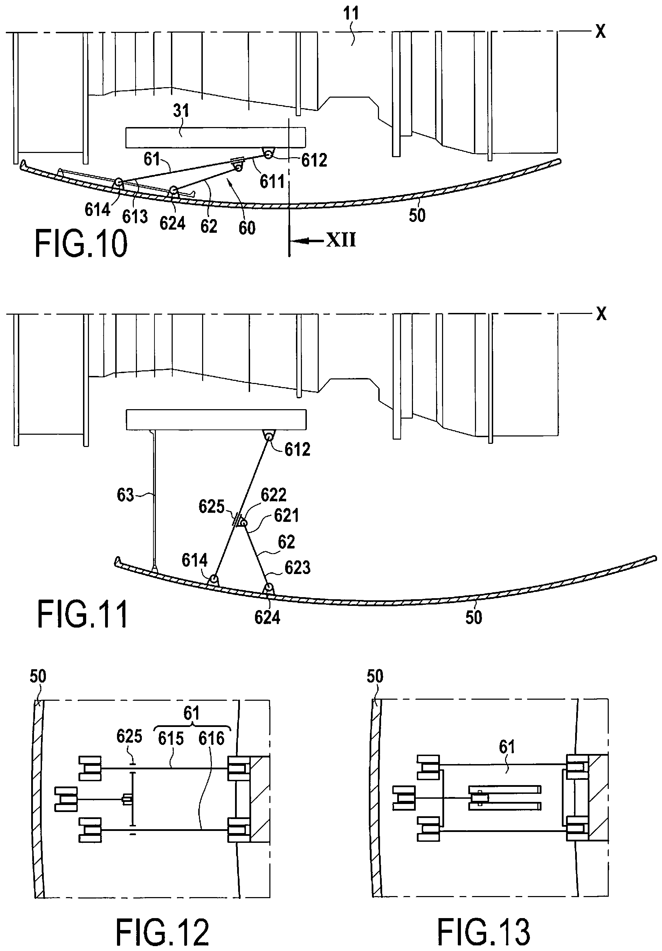

Afin de permettre des travaux d'inspection, maintenance, voire réparation du générateur de gaz 11, son carénage 18 peut comprendre des capots ouvrants 50. Chaque capot ouvrant 50 peut être situé latéralement par rapport au générateur de gaz 11 et être relié à la poutre longitudinale 31 correspondante de la structure 30 par un mécanisme de déploiement 60. Suivant un exemple illustré sur les figures 10 à 12, ce mécanisme de déploiement 60 peut comprendre un bras pivotant 61, s'étendant entre une première extrémité 611 reliée à la poutre longitudinale 31 par une première charnière 612 dont l'axe de pivotement peut notamment être vertical, et une deuxième extrémité 613 reliée au capot ouvrant 50 par une deuxième charnière 614, dont l'axe de pivotement peut notamment être parallèle à celui de la première charnière 612. Quand les axes de pivotement des premières et deuxièmes charnières 612, 614 sont parallèles, ce bras pivotant 61 peut être formé, comme illustré, par deux bielles parallèles 615, 616, décalées l'une par rapport à l'autre suivant ces axes de pivotement, comme illustré sur la figure 12. Toutefois, il est également envisageable que le bras pivotant 61 soit formé d'une pièce, avec une certaine largeur suivant les axes de pivotement, comme dans la variante illustrée sur la figure 13.

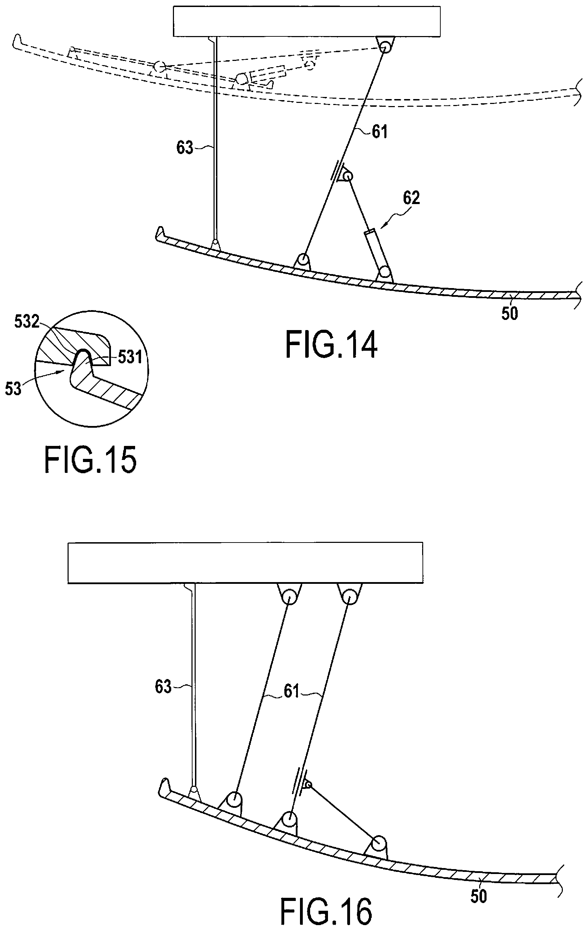

Afin d'assurer le maintien du capot ouvrant 50 en position ouverte et/ou en position fermée, le mécanisme de déploiement 60 peut comporter en outre une bielle de maintien 62 s'étendant entre une première extrémité 621, reliée par une première articulation 622 au bras pivotant 61 entre ses deux extrémités 611, 613, et une deuxième extrémité 623, reliée par une deuxième articulation 624 au capot ouvrant 50. Pour permettre le déplacement du capot ouvrant 50 entre ses positions ouverte et fermée, la première articulation 622 et/ou la deuxième articulation 624 de la bielle de maintien 62 peuvent être montées sur des glissières 625, comme illustré sur les figures 10 à 12, et/ou la bielle de maintien 62 peut être télescopique, comme dans la variante illustrée sur la figure 14. Le mécanisme de déploiement 60 peut alors comprendre aussi un verrou (non illustré) pour verrouiller la bielle de maintien 62 lorsque le capot ouvrant 50 est en position ouverte et/ou en position fermée.

Par ailleurs, le mécanisme de déploiement 60 peut aussi comprendre, en complément ou alternativement à la bielle de maintien 62, une béquille de capot 63 apte à être fixée de manière libérable entre la poutre longitudinale 31 et le capot ouvrant 50 en position ouverte pour maintenir cette position ouverte, et/ou au moins un verrou (non illustré) pour verrouiller le capot ouvrant 50 en position fermée en le retenant par exemple par son bord supérieur et/ou inférieur, comme illustré sur les figures 12 et 14.

Pour assurer l'étanchéité du capot ouvrant 50 en position fermée, et contenir le feu, il peut être pourvu d'au moins un joint d'étanchéité 53 sur son périmètre extérieur, et notamment sur son bord amont. Comme illustré sur la figure 15, ce joint d'étanchéité 53 peut comprendre une nervure 531 en saillie radiale vers l'intérieur sur le bord du capot ouvrant 50, et une rainure 532 solidaire du générateur de gaz 11 et ouverte radialement vers l'extérieur pour recevoir la nervure 531 quand le capot ouvrant 50 arrive en position fermée. Cet arrangement peut toutefois aussi être inversé, de manière à situer la nervure sur le générateur de gaz 11 et la rainure sur le capot ouvrant 50. Comme illustré, la rainure 532 peut notamment présenter une section en V.

Dans une variante illustrée sur la figure 16, le mécanisme de déploiement 60 peut comprendre au moins deux bras pivotants 61 parallèles et décalés l'un par rapport à l'autre en direction longitudinale, connectés de manière analogue à la poutre longitudinale 31 et au capot ouvrant 50, pour former ainsi avec eux un parallélogramme déformable permettant de maintenir l'orientation du capot ouvrant 50 pendant son ouverture et fermeture.

Lors de l'ouverture du capot ouvrant 50 à partir de la position fermée illustrée sur la figure 10 avec le mécanisme de déploiement 60, on peut d'abord procéder à faire pivoter au moins un bras pivotant 61, après le déverrouillage du verrou 64 et/ou de la bielle de maintien 62, pour écarter latéralement le capot ouvrant 50 du générateur de gaz 11 tout en le déplaçant vers l'aval, et atteindre ainsi la position ouverte illustrée sur la figure 11, afin de rendre ainsi accessible le générateur de gaz 11, par exemple pour des travaux d'inspection, entretien et/ou réparation. On peut finalement procéder à verrouiller le mécanisme de déploiement 60 dans cette position ouverte avec le verrou de la bielle de maintien 62 et/ou fixer la béquille de capot 63 entre la poutre longitudinale 31 et le capot ouvrant 50 afin d'éviter une fermeture intempestive. Ces étapes peuvent ensuite être inversées pour refermer le capot ouvrant 50, en revenant de la position ouverte illustrée sur la figure 11 vers la position fermée illustrée sur la figure 10.

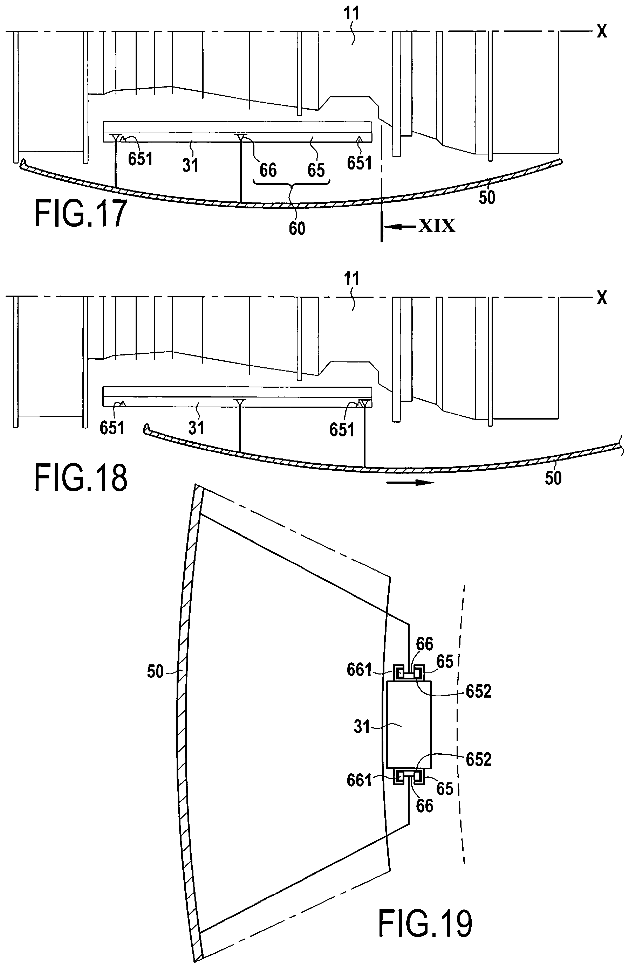

Suivant un deuxième exemple illustré sur les figures 17 à 19, le mécanisme de déploiement 60 peut comprendre, au lieu d'un ou plusieurs bras pivotants, une ou plusieurs coulisses 65 solidaires de la poutre longitudinale 31 et un ou plusieurs coulisseaux 66 solidaires du capot ouvrant 50 pour permettre une ouverture et fermeture du capot ouvrant 50 par coulissement de l'au moins un coulisseau 66 dans l'au moins une coulisse 65. En particulier, comme illustré sur les figures 17 et 18, la coulisse 65 peut être orientée suivant la direction longitudinale, pour ainsi permettre un coulissement longitudinal du capot ouvrant 50 entre sa position ouverte et sa position fermée. Comme illustré sur la figure 19, le mécanisme de déploiement 60 peut notamment comprendre une première coulisse 65 située sur une face supérieure de la poutre longitudinale 31 et une deuxième coulisse 65 située sur une face inférieure de la poutre longitudinale 31, recevant chacune au moins deux coulisseaux 66 reliés au capot ouvrant 50 et mutuellement décalés en direction longitudinale.

Afin de permettre le maintien du capot ouvrant 50 en position ouverte et/ou fermée, la coulisse 65 peut comporter au moins un verrou 651 en fin de course. Par ailleurs, pour faciliter leur coulissement, les coulisseaux 66 peuvent être munis de galets 661 aptes à rouler sur des surfaces de roulement 652 dans la coulisse 65, comme illustré sur la figure 19. Les autres éléments illustrés étant équivalents à ceux du premier exemple, ils reçoivent les mêmes chiffres de référence sur les figures 17 à 19 que sur les figures précédentes.

Lors de l'ouverture du capot ouvrant 50 à partir de la position fermée illustrée sur la figure 17 avec le mécanisme de déploiement 60 suivant ce deuxième exemple, et après avoir déverrouillé au moins un coulisseau 66, on peut procéder à faire coulisser le capot ouvrant 50 longitudinalement en direction aval vers la position ouverte illustrée sur la figure 18, afin de rendre ainsi accessible le générateur de gaz 11, par exemple pour des travaux d'inspection, entretien et/ou réparation. On peut finalement procéder à verrouiller le mécanisme de déploiement 60 dans cette position ouverte, afin d'éviter une fermeture intempestive. Ces étapes peuvent ensuite être inversées pour refermer le capot ouvrant 50, en revenant de la position ouverte illustrée sur la figure 18 vers la position fermée illustrée sur la figure 17.

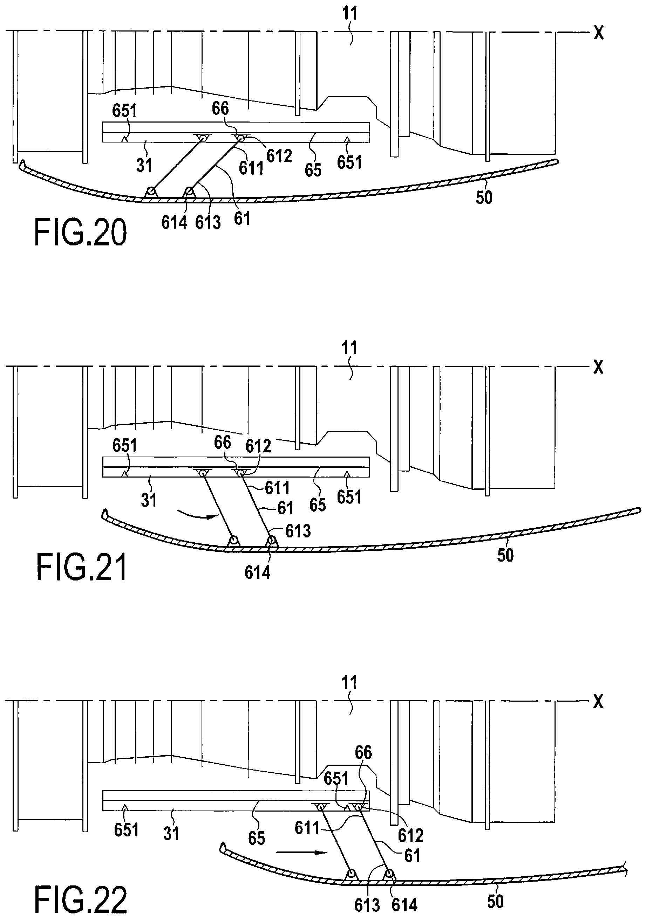

Afin d'offrir un encore meilleur accès au générateur de gaz, il est également possible de combiner bras pivotant et coulissement comme dans un mécanisme de déploiement 60 suivant un troisième exemple illustré sur les figures 20 à 22. Comme illustré, chaque coulisseau 66 peut alors être relié au capot ouvrant 50 par un bras pivotant 61 s'étendant entre une première extrémité 611 reliée à au coulisseau 66 par une première charnière 612 dont l'axe de pivotement peut notamment être vertical, et une deuxième extrémité 613 reliée au capot ouvrant 50 par une deuxième charnière 614, dont l'axe de pivotement peut notamment être parallèle à celui de la première charnière 612. Pour permettre le maintien du capot ouvrant 50 en position ouverte et/ou fermée, la coulisse 65 peut comporter au moins un verrou 651 en fin de course, comme dans le deuxième exemple susmentionné, et au moins une des charnières 612, 614 comporter un verrou (non illustré) pour verrouiller de manière libérable le débattement angulaire de l'au moins un bras pivotant 61. Les autres éléments illustrés étant équivalents à ceux des deux premiers exemples, ils reçoivent les mêmes chiffres de référence sur les figures 17 à 19 que sur les figures précédentes.

Lors de l'ouverture du capot ouvrant 50 à partir de la position fermée illustrée sur la figure 20 avec le mécanisme de déploiement 60 suivant ce troisième exemple, on peut d'abord procéder à faire pivoter au moins un bras pivotant 61, après son déverrouillage, pour écarter latéralement le capot ouvrant 50 du générateur de gaz 11, pour atteindre ainsi la position intermédiaire illustrée sur la figure 22. A partir de cette position intermédiaire et après avoir déverrouillé au moins un coulisseau 66, on peut procéder à faire coulisser le capot ouvrant 50 longitudinalement en direction aval vers la position ouverte illustrée sur la figure 21, afin de rendre ainsi accessible le générateur de gaz 11, par exemple pour des travaux d'inspection, entretien et/ou réparation. On peut finalement procéder à verrouiller le mécanisme de déploiement 60 dans cette position ouverte, afin d'éviter une fermeture intempestive. Ces étapes peuvent ensuite être inversées pour refermer le capot ouvrant 50, en revenant de la position ouverte illustrée sur la figure 21 vers la position fermée illustrée sur la figure 20 en passant à nouveau par la position intermédiaire illustrée sur la figure 22.

Quoique la présente invention ait été décrite en se référant à des exemples et modes de réalisation spécifiques, ainsi qu'à des variantes particulières, il est évident que des différentes modifications et changements peuvent être effectués sur ces exemples et leurs variantes. Par exemple, bien que l'on n'ait décrit, qu'un seul capot ouvrant avec un mécanisme de déploiement sur un latéral du générateur de gaz, il est bien sûr envisageable d'avoir un tel capot ouvrant, et un mécanisme de déploiement correspondant, de chaque côté du générateur de gaz. Par conséquent, la description et les dessins doivent être considérés dans un sens illustratif plutôt que restrictif.

## Revendications

1. Structure porteuse (30) configurée pour être montée sur un générateur de gaz (11) d'un turboréacteur à double flux (7) pour aéronef, la structure porteuse (30) comprenant :
deux poutres longitudinales (31) comportant chacune :
une interface de montage avant (33) et une interface de montage arrière (34), pour monter la structure porteuse (30) sur le générateur de gaz (11), l'interface de montage arrière (34) étant apte à permettre au moins un débattement longitudinal du générateur de gaz (11), et
un point de suspension latéral (35) pour transmettre des efforts longitudinaux et verticaux entre la structure porteuse (30) et une structure de suspension (40), et
une liaison transversale (32) reliant les deux poutres longitudinales (31),
la structure porteuse étant **caractérisée en ce que** la liaison transversale (32) comprend un point de suspension central (36) avec un orifice (361) configuré pour recevoir un groin de suspension (362) orienté en direction longitudinale pour transmettre des efforts latéraux et verticaux entre la structure porteuse (30) et la structure de suspension (40).

2. Structure porteuse (30) suivant la revendication 1, dans laquelle les interfaces de montage arrière (34) sont aussi aptes à permettre des débattements latéraux du générateur de gaz (11).

3. Structure porteuse (30) suivant l'une quelconque des revendications 1 ou 2, dans laquelle chaque interface de montage arrière (34) comprend des moyens de guidage longitudinal.

4. Structure porteuse suivant la revendication 3, dans laquelle les moyens de guidage longitudinal de chaque interface de montage arrière comprennent une coulisse (341) apte à recevoir un coulisseau (342) monté sur un plot (343) solidaire d'un carter de turbine du générateur de gaz (11).

5. Structure porteuse (30) suivant l'une quelconque des revendications précédentes, dans laquelle chaque interface de montage avant (33) est apte à transmettre des efforts longitudinaux et transversaux.

6. Structure porteuse (30) suivant l'une quelconque des revendications précédentes, formée en une seule pièce monobloc.

7. Structure porteuse (30) suivant l'une quelconque des revendications précédentes, dans lequel la liaison transversale (32) reliant les deux poutres longitudinales (31) comprend un arceau.

8. Ensemble structurel (20) comprenant la structure porteuse (30) suivant l'une quelconque des revendications précédentes et une structure de suspension (40) fixée à la structure porteuse (30) par les points de suspension latéraux et central (35,36).

9. Ensemble structurel (20) suivant la revendication 8, dans lequel la structure de suspension (40) comprend deux triangles de suspension (41), fixés chacun à un des points de suspension latéraux (35) correspondant.

10. Ensemble structurel (20) suivant l'une quelconque des revendications 8 ou 9, dans lequel la structure de suspension (40) comprend le groin de suspension (362), reçu en direction longitudinale dans l'orifice (361) correspondant du point de suspension central (36), le point de suspension central comprenant aussi une rotule (363) qui comporte une noix de rotule dans laquelle est formé l'orifice (361).

11. Ensemble structurel (20) suivant la revendication 10, dans lequel la structure de suspension (30) comprend une pyramide de suspension (42), le groin de suspension étant situé sur un sommet (421) de la pyramide de suspension (42).

12. Aéronef (1) comprenant au moins une structure réceptrice (2), un turboréacteur à double flux (7) et l'ensemble structurel (20) suivant l'une quelconque des revendications 8 à 11 reliant le turboréacteur à double flux (7) à la structure réceptrice (2).

## Patentansprüche

1. Tragende Struktur (30), die derart ausgelegt ist, dass sie an einem Gasgenerator (11) eines Mantelstromtriebwerks (7) für ein Luftfahrzeug anbringbar ist, wobei die tragende Struktur (30) umfasst:
zwei Längsträger (31), die jeweils umfassen:
eine vordere Montageschnittstelle (33) und eine hintere Montageschnittstelle (34), um die tragende Struktur (30) an dem Gasgenerator (11) anzubringen, wobei die hintere Montageschnittstelle (34) imstande ist, mindestens eine Längsauslenkung des Gasgenerators (11) zu gestatten, und
einen seitlichen Aufhängungspunkt (35), um Längs- und Vertikalkräfte zwischen der tragenden Struktur (30) und einer Aufhängungsstruktur (40) zu übertragen, und
eine Querverbindung (32), die die beiden Längsträger (31) verbindet,
wobei die tragende Struktur **dadurch gekennzeichnet ist, dass** die Querverbindung (32) einen zentralen Aufhängungspunkt (36) mit einer Öffnung (361) umfasst, die ausgelegt ist, um eine Aufhängungsnase (362) aufzunehmen, die in Längsrichtung ausgerichtet ist, um seitliche und vertikale Kräfte zwischen der tragenden Struktur (30) und der Aufhängungsstruktur (40) zu übertragen.

2. Tragende Struktur (30) nach Anspruch 1, wobei die hinteren Montageschnittstellen (34) ebenfalls imstande sind, seitliche Auslenkungen des Gasgenerators (11) zu gestatten.

3. Tragende Struktur (30) nach einem der Ansprüche 1 oder 2, wobei jede hintere Montageschnittstelle (34) Mittel zur Längsführung umfasst.

4. Tragende Struktur nach Anspruch 3, wobei die Mittel zur Längsführung jeder hinteren Montageschnittstelle eine Gleitschiene (341) umfassen, die imstande ist, ein Gleitstück (342) aufzunehmen, das auf einem Klotz (343) angebracht ist, der fest mit einem Turbinengehäuse des Gasgenerators (11) verbunden ist.

5. Tragende Struktur (30) nach einem der vorhergehenden Ansprüche, wobei jede vordere Montageschnittstelle (33) imstande ist, Längs- und Transversalkräfte zu übertragen.

6. Tragende Struktur (30) nach einem der vorhergehenden Ansprüche, die aus einem einzigen einteiligen Stück gebildet ist.

7. Tragende Struktur (30) nach einem der vorhergehenden Ansprüche, wobei die Querverbindung (32), die die beiden Längsträger (31) verbindet, einen Bügel umfasst.

8. Strukturanordnung (20), die die tragende Struktur (30) nach einem der vorhergehenden Ansprüche und eine Aufhängungsstruktur (40) umfasst, die an der tragenden Struktur (30) durch die seitlichen und zentralen Aufhängungspunkte (35, 36) befestigt ist.

9. Strukturanordnung (20) nach Anspruch 8, wobei die Aufhängungsstruktur (40) zwei Aufhängungsdreiecke (41) umfasst, die jeweils an einem der entsprechenden seitlichen Aufhängungspunkte (35) befestigt sind.

10. Strukturanordnung (20) nach einem der Ansprüche 8 oder 9, wobei die Aufhängungsstruktur (40) die Aufhängungsnase (362) umfasst, die in Längsrichtung in der entsprechenden Öffnung (361) des zentralen Aufhängungspunktes (36) aufgenommen wird, wobei der zentrale Aufhängungspunkt ebenfalls ein Kugelgelenk (363) umfasst, das eine Kugelgelenknuss aufweist, in der die Öffnung (361) ausgebildet ist.

11. Strukturanordnung (20) nach Anspruch 10, wobei die Aufhängungsstruktur (30) eine Aufhängungspyramide (42) umfasst, wobei die Aufhängungsnase an einem Scheitelpunkt (421) der Aufhängungspyramide (42) angeordnet ist.

12. Luftfahrzeug (1), umfassend mindestens eine Empfangsstruktur (2), ein Mantelstromtriebwerk (7) und die Strukturanordnung (20) nach einem der Ansprüche 8 bis 11, die das Mantelstromtriebwerk (7) mit der Empfangsstruktur (2) verbindet.

## Claims

1. A load-bearing structure (30) configured to be mounted on a engine core (11) of a turbofan engine (7) for an aircraft, the load-bearing structure (30) comprising:
two longitudinal beams (31) each including:
a forward mounting interface (33) and a rear mounting interface (34), for mounting the load-bearing structure (30) on the engine core (11), the rear mounting interface (34) being able to allow at least the longitudinal travel of the engine core (11), and
a lateral suspension point (35) for transmitting longitudinal and vertical forces between the load-bearing structure (30) and a suspension structure (40), and
a transverse connection (32) connecting the two longitudinal beams (31)
the load-bearing-structure being **characterized in that** the transverse connection (32) comprises a central suspension point (36) with an orifice (361) configured to receive a suspension snout (362) oriented in longitudinal direction for transmitting lateral and vertical forces between the load-bearing structure (30) and the suspension structure (40).

2. The load-bearing structure (30) as claimed in claim 1, wherein the rear mounting interfaces (34) also be able to allow lateral travel of the engine core (11).

3. The load-bearing structure (30) as claimed in any of claims 1 or 2, wherein each rear mounting interface (34) comprises longitudinal guiding means.

4. The load-bearing structure (30) as claimed in claim 3, wherein the longitudinal guiding means of each rear mounting interface comprise a slide (341) able to receive a slider (342) mounted on a pad (343) forming a single part with a turbine casing of the engine core (11).

5. The load-bearing structure (30) as claimed in any of the preceding claims, wherein each forward mounting interface (33) is able to transmit longitudinal and transverse forces.

6. The load-bearing structure (30) as claimed in any of the preceding claims, formed of a single-unit part.

7. The load-bearing structure (30) as claimed in any of the preceding claims, wherein the transverse connection (32) connecting the two longitudinal beams (31) comprises an arch.

8. A structural assembly (20) comprising a load-bearing structure (30) as claimed in any of the preceding claims and a suspension structure (40) attached to the load-bearing structure (30) by the rear and central suspension points (35,36).

9. The structural assembly (20) as claimed in claim 8, wherein the suspension structure (40) comprises two suspension triangles (41), each attached to one of the corresponding lateral suspension points (35).

10. The structural assembly (20) as claimed in any of claims 8 or 9, wherein the suspension structure (40) comprises the suspension snout (362), received in the longitudinal direction in the corresponding orifice (361) of the central suspension point (36), the central suspension point comprising a ball joint (363) including a ball joint yoke wherein the receptacle (361) is formed.

11. The structural assembly (20) as claimed in claim 10, wherein the suspension structure (30) comprises a suspension pyramid (42), the suspension snout being located on an apex (421) of the suspension pyramid (42).

12. An aircraft (1) comprising at least one receiving structure (2), a turbofan engine (7) and the structural assembly (20) as claimed in any of claims 8 to 11 connecting the turbofan engine (7) to the receiving structure (2).
